Europäisches Patentamt

**European Patent Office**

Office européen des brevets

(11) Publication number : **0 341 406 B1**

## EUROPEAN PATENT SPECIFICATION

(45) Date of publication of patent specification :
24.05.95 Bulletin 95/21

(51) Int. Cl.⁶ : **G06F 15/80**

(21) Application number : **89105327.4**

(22) Date of filing : **22.03.89**

(54) Methods and circuit for implementing an arbitrary graph on a polymorphic mesh.

(30) Priority : **13.05.88 US 193990**

(43) Date of publication of application :
**15.11.89 Bulletin 89/46**

(45) Publication of the grant of the patent :
**24.05.95 Bulletin 95/21**

(84) Designated Contracting States :
**DE FR GB IT**

(56) References cited :
PROCEEDINGS OF THE 1983 INTER-
NATIONAL CONFERENCE ON PARALLEL
PROCESSING 23 AUGUST 1983, COLUMBUS,
OHIO, USA PAGES 506-510; LEE: 'MOPAC, A
PARTITIONABLE AND RECONFIGURABLE
MULTICOMPUTER ARRAY'
PROCEEDINGS OF THE 1987 INTER-
NATIONAL CONFERENCE ON PARALLEL
PROCESSING 17 AUGUST 1987, PENNSYL-
VANIA, USA PAGES 893 - 900; GUPTA: 'A
RECONFIGURABLE LIW ARCHITECTURE'

(56) References cited :
IEEE TRANSACTIONS ON COMPUTERS, VOL.
C-31, NO. 9, SEPTEMBER 1982, NEW YORK
US, PAGES 809 - 819; FLANDERS: 'A UNIFIED
APPROACH TO A CLASS OF DATA MOVE-
MENTS ON AN ARRAY PROCESSOR'
ICL TECHNICAL JOURNAL, VOL. 2, NO. 2,
NOVEMBER 1980, HITCHIN GB, PAGES 191 -
206; JESSHOPE: 'DATA ROUTING AND
TRANSPOSITIONS IN PROCESSOR ARRAYS'
PROCEEDINGS OF THE IFIP WG 10.3 WORK-
ING CONFERENCE ON HIGHLY PARALLEL
COMPUTERS FOR NUMERICAL AND SIGNAL
PROCESSING APPLICATIONS 24 MARCH
1986, SOPHIA ANTIPOLIS, FRANCE PAGES
211 - 222; HANCU: 'A SYSTOLIC SCHEME FOR
FAST PARALLEL COMMUNICATION IN VLSI
MESH-CONNECTED PARALLEL COMPUTERS'

(73) Proprietor : **International Business Machines
Corporation
Old Orchard Road
Armonk, N.Y. 10504 (US)**

(72) Inventor : **Li, Hungwenan
60 Deer Field Lane South
Pleasantville, NY 10570 (US)**

(74) Representative : **Jost, Ottokarl, Dipl.-Ing.
IBM Deutschland Informationssysteme GmbH,
Patentwesen und Urheberrecht
D-70548 Stuttgart (DE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention concerns the modification of a Single Instruction Multiple Datastream (SIMD) polymorphic mesh network array processing system by the inclusion of a Single Instruction Multiple Address (SIMA) mechanism including a content addressable packet buffer memory to enable processing by an algorithm representing an arbitrary graph rather than algorithms representing predetermined graphs.

In network design, a primary objective is to increase the speed of transmitting an instruction or performing a task while concurrently creating more network parallelism. In a preferred embodiment of the present invention, a fourth degree Single Instruction Multiple Datastream network array of conventional polymorphic mesh configuration is modified by a Single Instruction Multiple Address mechanism without altering the mesh network interconnection, in order to provide increased speed and network parallelism than in heretofore known arrangements.

In the European Patent EP-A-0 257 581 a polymorphic mesh network is described for a SIMD parallel architecture containing n x n processing elements interconnected physically by a mesh network within each processing element, wherein a polymorphic controller allows the architecture to dynamically derive many conventional graphs such as a tree, pyramid, cube and the like under instruction control. There is relatively low parallelism if the affected processing elements are not adjacent.

The SIMD generated graphs cover a wide spectrum of algorithms useful in image processing, computer vision and graphic applications. However, there are algorithms in these applications and others that are beyond conventional graphs and can only be represented by an arbitrary graph.

There is no general parallel architecture capable of matching all possible graphs since each algorithm results in a unique type of graph. The present invention describes several methods and a circuit which allow the processing elements in a polymorphic mesh architecture to establish communication between each other as prescribed by an arbitrary graph. The invention provides for buffer memory to address all processing elements having a matching address. This feature is the single instruction multiple address feature.

A SIMA circuit containing a two-dimensional memory, a priority circuit and a register, interacts with the polymorphic mesh network of processing elements through a data line. A controller provides address and mode signals. Polymorphic mesh processing requires each processing element to exchange with or deliver to its row or column neighbor information. The movement is guided by a packet which comprises an address and data. The SIMA circuit creates N addresses each of which points to the buffer memory that contains a packet having the proper bit value in the i-th position of the address. Packet exchanging or delivery is performed according to the transfer method employed.

Content-addressable-memory and two-dimensional memory are known to those skilled in the art. The use of a content-addressable memory to derive multiple addresses from a single instruction in a single instruction multiple datastream array processor is where the present invention resides, particularly as applied to packet exchange and delivery.

An object of the present invention is therefore, the provision of a polymorphic-mesh array processing system in which a packet of information containing address information and related information is transferred during an operating cycle from one individually addressable processing element to another individually addressable processing element comprising:

a plurality of N individually addressable processing elements configured in a single instruction multiple datastream mode where N is an integer greater than one;

controller means for providing a signal containing an instruction and an address for said processing elements during sequential operating cycles for transferring a respective packet from a first one of said processing elements to a second one of said processing elements in response to said instruction and said address according to an arbitrary graph ; and

single instruction multiple address means, including content addressable packet buffer memory and connected to said controller means and to said processing elements, for causing during one of the sequential operating cycles said second processing element to access the respective packet in said buffer memory associated with said first processing element, in response to the address from said controller means, whereby the system transfers the respective packet from said first processing element to said second processing element to implement the arbitrary graph.

A further object of the invention is the provision of an array processing system in which a packet containing address information and related data information is transferred during an operating cycle from one processing element to another processing element comprising:

an array of individually addressable processing elements configured in single instruction multiple datastream mode, wherein certain ones of said processing elements are directly connected to each other;

controller means for providing during sequential operating cycles an instruction with an address signal; and

EP 0 341 406 B1

single instruction multiple address means, including a content addressable packet buffer memory and connected to said controlle means and to said processing elements, for comparing a condition of a preselected bit in a respective packet in said content addressable packet buffer memory associated with eaach processing element with a predeterminded condition (e.g. binary 1) and for providing to each processing element a respective packet in said content addressable packet buffer memory according to address information contained in the respective packet when the condition of the predeterminded bit in the respective packet is the same as the predetermined condition such that the respective packet associated with one of said processing elements is transferred to another of said processing elements in response to said instruction with an address signal in accordance with an arbitrary graph.

A further object of the invention is the provision of a method of exchanging packets in a buffer memory on a first-available basis for allowing processing elements in a polymorphic mesh architecture to establish communication prescribed by an arbitrary graph, or on a buffer-sensitive basis for allowing processing elements in a polymorphic mesh architecture to establish communication prescribed by an arbitrary graph.

A still further object of the invention is the provision of a method of exchanging packets in a buffer memory on a force-exchange basis for allowing processing elements in a polymorphic mesh architecture to establish communication prescribed by an arbitrary graph.

BRIEF DESCRIPTION OF THE DRAWINGS

| Fig. 1 | is a schematic representation of an arbitrary graph of an algorithm; |
| Fig. 2 | is a schematic representation of a polymorphic mesh network of processing elements with a controller and external buffer memory; |
| Fig. 3 | is a representation of the format of a packet; |
| Fig. 4 | is a schematic representation of a single instruction multiple address circuit containing a two-dimensional memory, a priority circuit and a register; |
| Figs. 5A to 5H | are schematic representations of the packet transfer between processing elements in accordance with a method of the present invention; |
| Figs. 6A to 6M | are schematic representations of the packet transfer between processing elements in accordance with another method of the present invention, and |
| Figs. 7A to 7L | are schematic representations of the packet transfer between processing elements in accordance with another method of the present invention. |

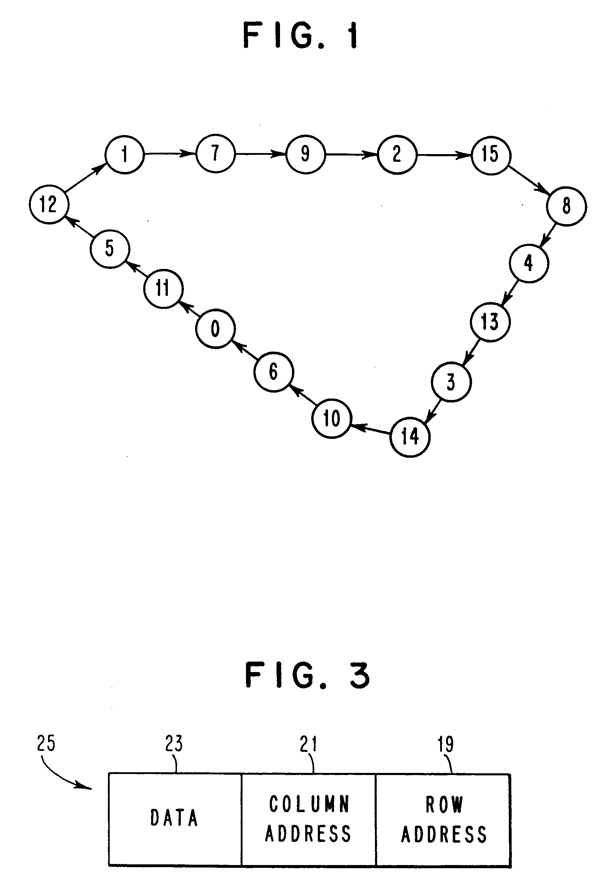

Referring now to the figures and to Figure 1 in particular, there is shown a schematic representation of an arbitrary graph of an algorithm. Any computer algorithm is capable of being represented by a graph with a node representing a task or process and the arrow representing the interconnecting communication when implemented in a parallel processor, the nodes are assigned to hardware processing elements (PE) and the arrows are implemented by communications paths among the processing elements.

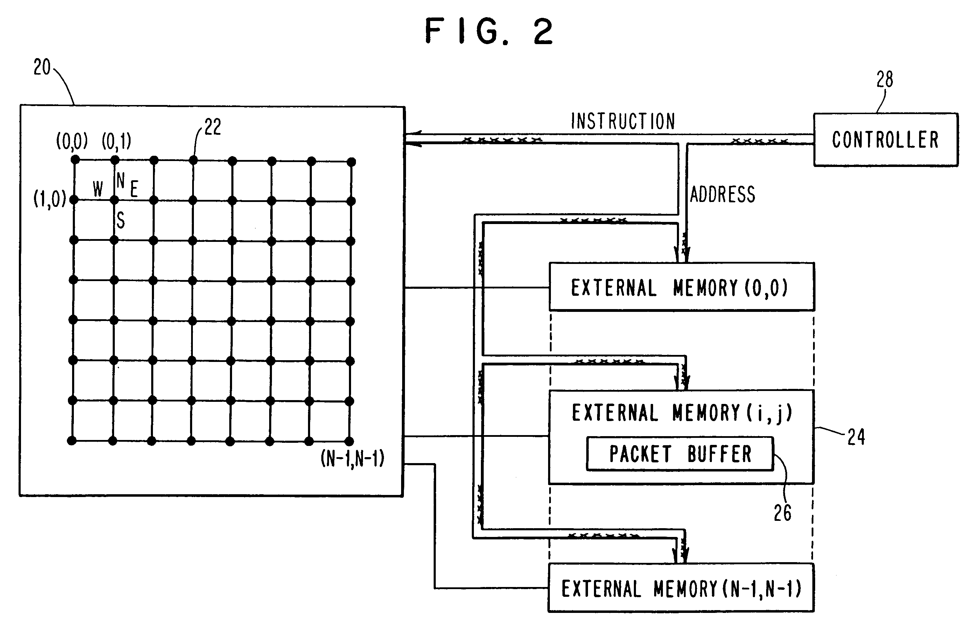

Figure 2 shows a polymorphic-mesh arrangement 20 of N x N processing elements 22. In the polymorphic-mesh arrangement, each processing element is situated in a specific row and column, represented by its coordinate, (r,c) where both r and c are in the range between 0 and n-1 and can be represented as two log(N) - bit strings: $r_k, r_{k-1} \ldots r, r_o$ and $c_k, c_{k-1} \ldots c, c_o$, where k = log(N).

A O-row neighbor of processing element PE(s,t) is processing element PE(p,q) where s and p only differ in $s_o$ and $p_o$. Similarly, the O-column neighbor of processing element PE(s,t) is processing element PE(p,q) if and only if t and q only differ in $t_o$ and $q_o$. Generalizing the definitions, the i-th row neighbor of processing element PE(s,t) is processing element PE(p,q) if and only if s and p differ only in $s_i$ and $p_i$. Similarly, the i-th column neighbor of processing element PE(s,t) is processing element PE(p,q) if and only if t and q differ only in $t_i$ and $q_i$.

According to the present invention, processing elements are required to exchange information with their i-row and i-column neighbors in a particular manner. In order to exchange information with O-row and O-column neighbors, the physical interconnections of the mesh arrangement are employed since the neighbors are located in adjacent rows or adjacent columns. In the case of 1-row (or 1-column) neighbors, the communication distance between neighbors is two rows (or columns). For example, the 1-row neighbor of 3 = 0011 is in row 1 = 0001. Therefore, shifting data twice along the row direction from processing element 3 at location (0,3) in the mesh toward the destination processing element 1 at location (0,1) in the mesh is required for the exchange. Such a shifting is referred to as "hop direction 2" to specify that data in every column (or row) are moving along the same direction for two columns (or rows). Similarly, the exchange between i-row or i-column neighbors requires a "hop direction $2^i$" where the "direction" can be north, east, south or west representing the four physical links of the processing elements 22 in the mesh arrangement 20.

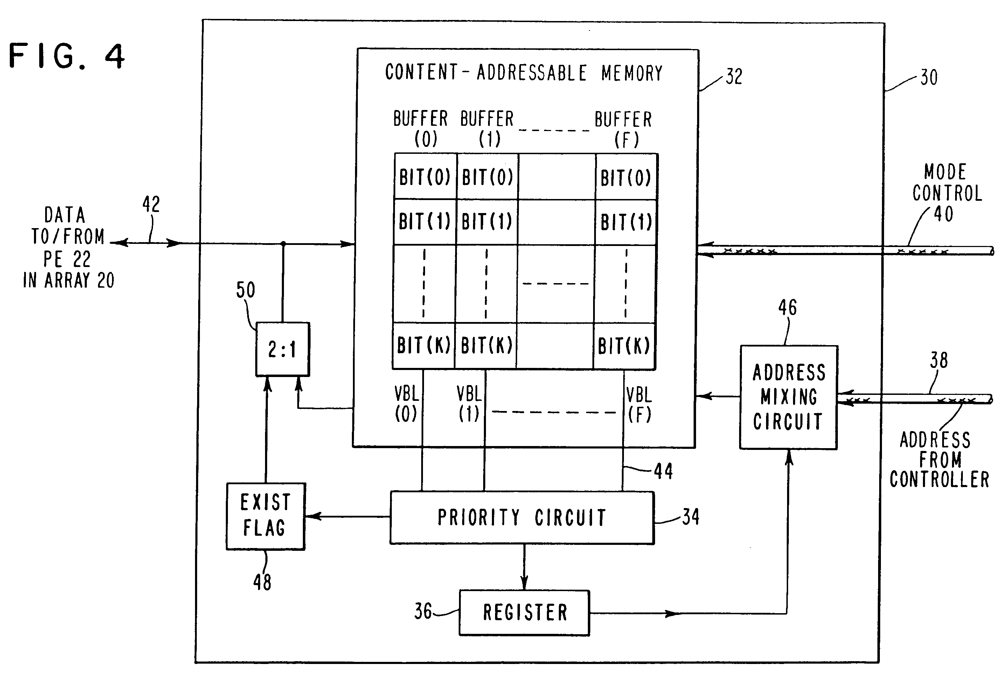

Figure 3 illustrates the format of a packet of information. The i-row (or column) exchange is controlled by

3

a packet 25 comprising the row address 19 of the packet, the column address 21 of the packet, and the data 23 to be exchanged. The packet 25 itself is stored in external memory 24 of the polymorphic system. The external memory is arranged for storing packets associated with each of the processing elements 22 in the mesh arrangement 20 in predetermined portions of the memory 24. The portion of the external memory 24 referred to as packet buffer 26 stores the packet of the associated processing element in content addressable locations. It is based upon the concept of content-addressable memory that a SIMA circuit described hereinafter alleviates the limitation of the SIMD architecture which is capable of providing only a single address to access the packets in the buffer and also permits N processing elements in the system to access their respective packets stored in N different locations of the packet buffer 26. It is the SIMA circuit which extends the capability of Single Instruction Multiple Datastream architecture and facilitates the realization of an arbitrary graph in the polymorphic mesh arrangement 20.

In conventional SIMD parallel architecture, the external memory 24 is addressed by an address signal from a controller 28 as shown in Figure 2. As a result, the packets in the same buffer location will be selected for exchanging. The probability that packets in the same buffer memory location are i-th row or i-th column neighbors is fairly small. As a result, the conventional SIMD addressing scheme will exhibit very low parallelism in exchanging any of the packets.

In order to increase the parallelism, an addressing scheme is required which provides that for all buffer memories, any matching packet will be addressed simultaneously with a single instruction. The Single Instruction Multiple Address circuit shown in Figure 4 performs the described function.

The SIMA circuit 30 shown in Figure 4 includes a two dimensional, content-addressable memory 32, a priority circuit 34 and a register 36. The circuit 30 receives as input signals from controller 28, an address signal along conductor 38 and a mode control signal along conductor 40. The mode control signal provides for either conventional memory address mode in which one address results in one data output or preferably, provides for a content addressable mode in which given data results in multiple addresses. The circuit 30 communicates with each processing element 22 in array 20 via a data output signal along conductor 42. The function of the circuit 30 is to create N addresses each of which points to the buffer memory that contains a packet having a matching bit in the i-th position.

The two dimensional memory 32 is organized as F buffers horizontally and K bits vertically. In a conventional mode, the memory 32 is addressed horizontally so that the data bit can be read/write to/from the buffer memory 32. In a content addressable mode, the address is interpreted vertically such that a particular bit position, e.g. i-th position for i-th row packet detection, is selected. As a result, the i-th bit of all F buffers is compared with a logic "1" and when there is a match, the vertical bit line (VBL) 44 for the matching row will be reflected as a logic "1". There is one VBL for each buffer memory or a total of F VBL's connected to priority circuit 34.

The priority circuit 34 decodes the lowest index of the VBL that has a logic "1" signal present. The decoded lowest index corresponds to the address of the packet that has a matching bit position prescribed by the controller 28. The priority circuit is commercially available and has been used in general content-addressable memory as well as in the post normalization of floating point arithemetics. A preferred priority circuit is sold commercially by Fairchild Camera and Instrument Company as device number F100165.

The memory 32 and priority circuit 34 provide the capability of obtaining multiple addresses of matching packets under the control of a single instruction. These addresses are stored in the registers 36 distributed in each processing element. An address mixing circuit 46 permits the register 36 to be offset by the address provided by the controller 28 to properly access the buffer memory. The address mixing circuit 46 also controls the multiplexing between the register 36 and the address signal from the controller.

The priority circuit 34 in addition to providing the address of the matching circuit also resolves the conflict of having more than one matching packet in the same buffer. An output of the priority circuit 34 is coupled to an exist flag circuit 48 which indicates the existence of a matching packet in a buffer memory. The exist flag circuit output is provided to the appropriate processing element as an indication of whether a packet exists for exchanging. A multiplexer 50 switches the output between the exist flag circuit 48 and memory 32.

Content addressable memory is commercially available, for instance, from Fairchild Camera and Instrument Company as device number F100142. The present invention as will be described hereinafter resides in the deriving of a multiple address from a single instruction in content-addressable memory and applying the packet exchanging to SIMD architecture.

Having now described the SIMA circuit 30 which facilitates the exchange of data packets between processing elements, there are three alternative methods of achieving the exchange.

Referring to the arbitrary graph in Figure 1, the following table illustrates the initial packet preparation of the 16 processing elements in the figure.

| SOURCE PE | | | DESTINATION PE | | | XOR 3:0 |
|---|---|---|---|---|---|---|
| PE | = 0 | 0000 | PE | = 11 | 1011 | 1011 |
| PE | = 1 | 0001 | PE | = 7 | 0111 | 0110 |
| PE | = 2 | 0010 | PE | = 15 | 1111 | 1101 |
| PE | = 3 | 0011 | PE | = 14 | 1110 | 1101 |
| PE | = 4 | 0100 | PE | = 13 | 1101 | 1001 |
| PE | = 5 | 0101 | PE | = 12 | 1100 | 1001 |
| PE | = 6 | 0110 | PE | = 0 | 0000 | 0110 |
| PE | = 7 | 0111 | PE | = 9 | 1001 | 1110 |
| PE | = 8 | 1000 | PE | = 4 | 0100 | 1100 |
| PE | = 9 | 1001 | PE | = 2 | 0010 | 1011 |
| PE | = 10 | 1010 | PE | = 6 | 0110 | 1100 |
| PE | = 11 | 1011 | PE | = 5 | 0101 | 1110 |
| PE | = 12 | 1100 | PE | = 1 | 0001 | 1101 |
| PE | = 13 | 1101 | PE | = 3 | 0011 | 1110 |
| PE | = 14 | 1110 | PE | = 10 | 1010 | 0100 |
| PE | = 15 | 1111 | PE | = 8 | 1000 | 0111 |

As can be seen from the table, processing element 0 packet is to be delivered to processing element 11, processing element 1 packet to be delivered to processing element 7, and so forth as shown in Figure 1.

FIRST AVAILABLE METHOD

The first-available method relies upon the ability of SIMA circuit 30 to obtain the first packet in the buffer memory that has a logic "1" bit in the i-th position of the packet, i.e. packet(i) = 1, in the i-row exchange. For a j-column exchange, packet(j+k) is compared with a logic "1" so that the existence of a matching packet and its buffer address, if any, are provided.

The first available method is expressed in pseudocode as follows:

Phase 1: preparing packet
For each link of the graph, represent the source node as
$(sr_k sr_{k-1}...sr_o, sc_k sc_{k-1}...sc_o)$
(sr for row of source node and sc for column of source node) and represent destination node as
$(dr_k dr_{k-1}...dr_o, dc_k dc_{k-1}...dc_o)$
Obtain packet as
packet(i) = $sr_i$XOR$dr_i$
packet(i + k) = $sc_i$XOR$dc_i$

Attached w-bit data as packet(2k+1) to packet(2k+w)

Phase 2.Exchanging Packet

```
while (buffer___not___empty() ){
    for (i=0;i<k;i++){
        packet = first-available (i-th___row);
        packet = i-row___exchange ();
        packet(i) = 0;
    }


    for (j=k; j<2k;j++){
        packet = first-available (j-th___column);
        packet = j-col___exchange ();
        packet(j) = 0;


    }
}
```

The i-row___ exchange function performs the exchange as follows. When packet(i) = 1, the processing element sends the packet to its i-row neighbor which stores the received packet in the buffer memory and resets packet(i) to zero. If packet(i) = 0, no packet is sent.

The exchange process continues until the buffer memory is empty. This is achieved by ORing every exist flag signal of all the SIMA circuits 30. Detailed tracking of the emptiness of the buffer is not shown for the sake of simplicity in expressing the exchanging algorithm.

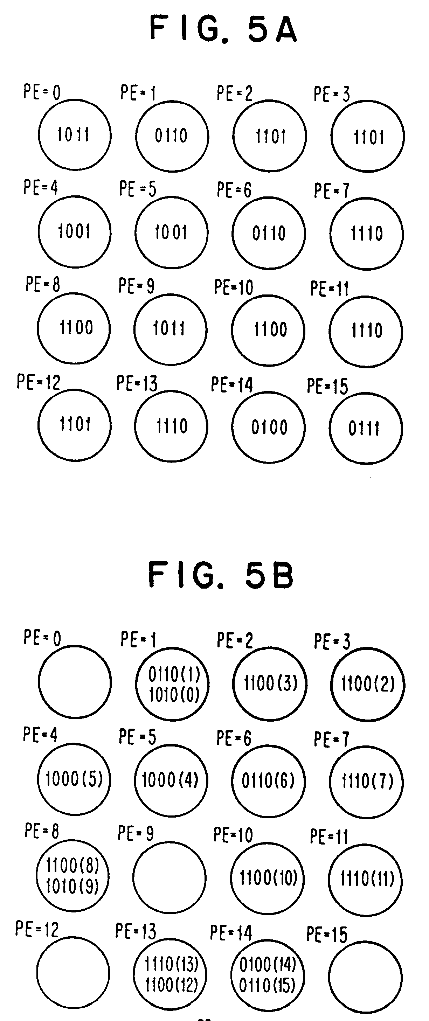

The exchange of the packets is shown schematically in Figures 5A-5H. In Figure 5A there is shown an initial packet assignment for each processing element 0 to 15 in accordance with the table above. The processing elements are arranged in a polymorphic mesh configuration.

Figure 5B illustrates the packets exchanged after a O-row exchange during a first operating cycle according to the first-available method.

The number in parenthesis is the initial processing element location from which the packet originated. The same initial PE number will remain with the packet throughout all the subsequent exchanges. When two packets are shown in the same processing element, the uppermost data is the delivered packet and the lowermost data is the packet to be delivered. An empty processing element indicates the absence of any logic "1" in the address. A bar is added to the processing element when the packet above the bar has reached its final destination. The described convention will be used in all the ensuing figures.

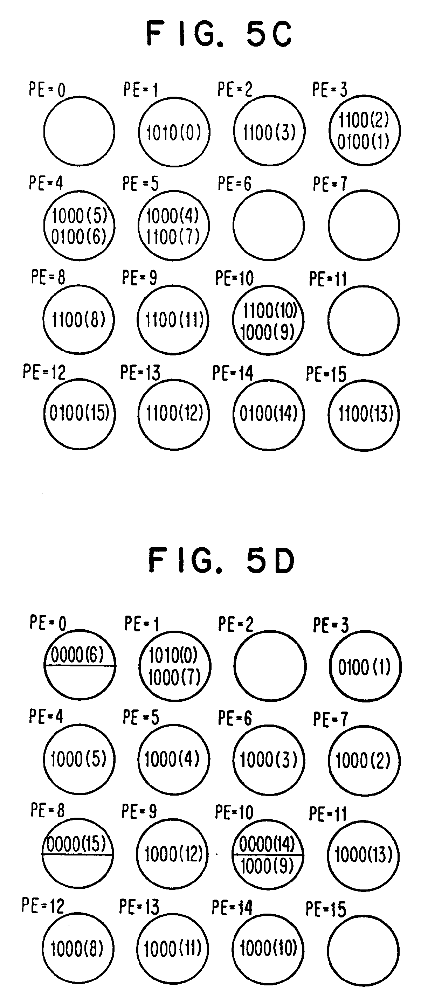

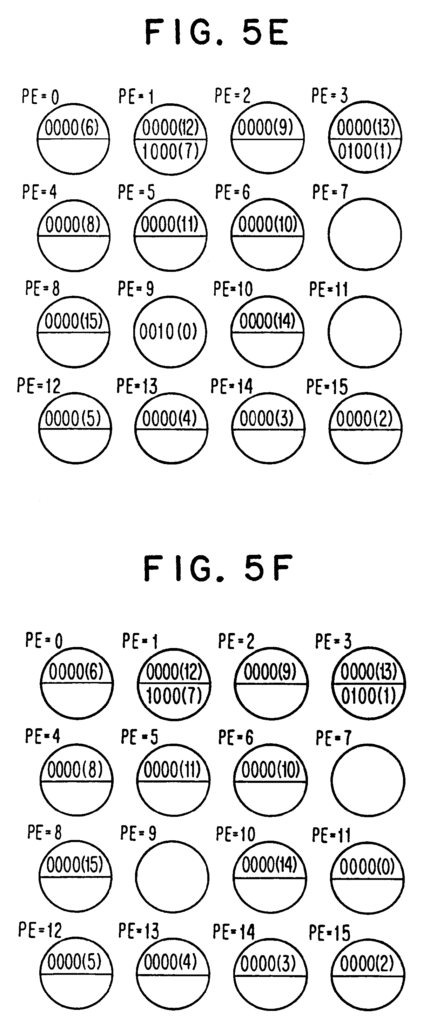

Figure 5C illustrates the packets exchanged after a subsequent 1-row exchange cycle. Figure 5D illustrates the packets exchanged after a subsequent O-column exchange cycle. Subsequently a 1-column exchange cycle is performed and the results are shown in Figure 5E.

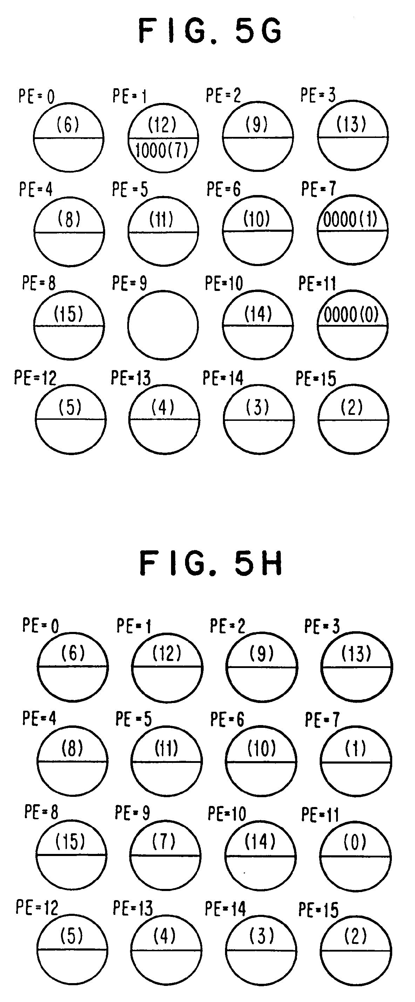

Since there are no packets for a O-row exchange of the packets shown in Figure 5E, a 1-row exchange is performed during a next cycle and the result is shown in Figure 5F. A subsequent O-column exchange is performed during the next operating cycle and the result is shown in Figure 5G. Upon completion of another 1-column exchange cycle all the packets are delivered as shown in Figure 5H.

The packets have been delivered in accordance with the arbitrary graph shown in Figure 1. That is, the packet initially in PE = 0 now resides in PE = 11, the packet initially in PE = 1 now resides in PE = 7 and so forth.

The described first-available method requires that a packet is always forwarded to its i-row/column neighbor regardless of the ability of its neighbor to accept the packet due to, for example, a lack of buffer memory. A processing element will accumulate many packets in the just described method while the processing element is waiting in the buffer memory for delivery and additional packets are being delivered from neighboring processing elements. The phenomenon is referred to as "contention". One problem arising with contention is saturation or exhaustion of buffer memory.

An alternative method requires only a single buffer memory without contention and without saturation of memory.

BUFFER-SENSITIVE METHOD

The buffer-sensitive method prepares the packet in the same manner as the first available method. However, the packet exchange is different.

The buffer sensitive method is expressed in pseudocode as follows:

Phase 1:Preparing packet

For each link of the graph, represent the source node as
$(sr_k sk_{k-1}...sr_o, sc_k sc_{k-1}...sc_o)$
(sr for row of source node and sc for column of source node) and represent destination node as
$(dr_k dr_{k-1}...dr_o, dc_k dc_{k-1}...dc_o)$
Obtain packet as
$packet(i) = sr_i XOR dr_i$
$packet(i+K) = sc_i XOR dc_i$

Attach w-bit data as packet(2k+1) to packet(2k+w)

Phase 2.Exchanging packet

```
while (buffer___not___empty ()) {
    for (i=0;i<k;i++) {
        temp___packet = i-row___exchange ();
        if ((temp___packet(i) AND packet(i) ) = = 1) {
            packet = temp___packet;
            packet (i) = 0;

        }


        else

            packet = old___packet;


    }
```

```
for (j=k;j<2k;j++){

    temp___packet = j-col___exchange();
    if ((temp___packet(j) AND packet (j)) = 1 ) {
    packet = temp___packet;
    packet(j) = 0;


    }


    else


        packet = old___packet;


    }


}
```

The method uses only one location of the packet buffer, i.e. temp_packet, in exchanging the packet and therefore buffer memory saturation cannot occur. However, because both packets must have a logic "1" in the matching position in order to exchange packets, situations will occur where a packet containing a level "1" will not be forwarded. This shortcoming is remedied in a further alternative method described hereinafter.

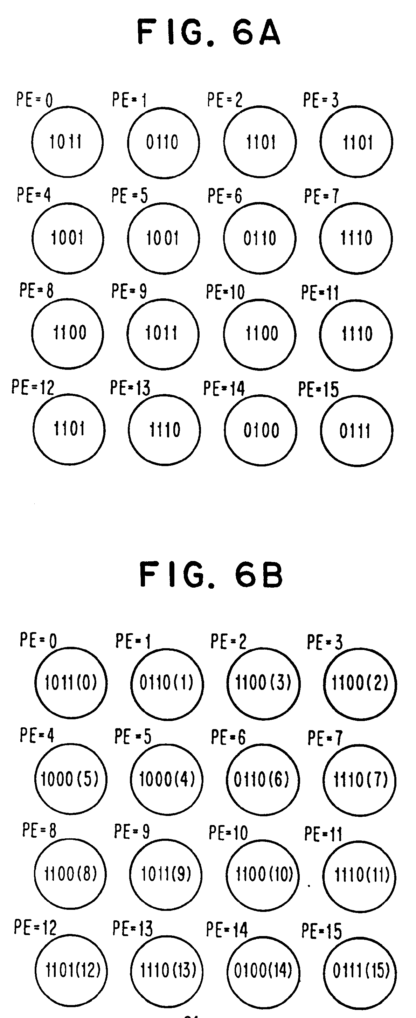

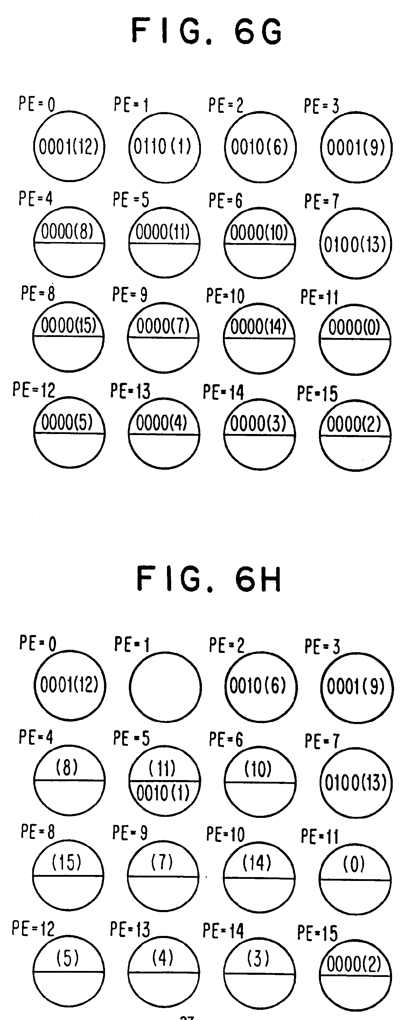

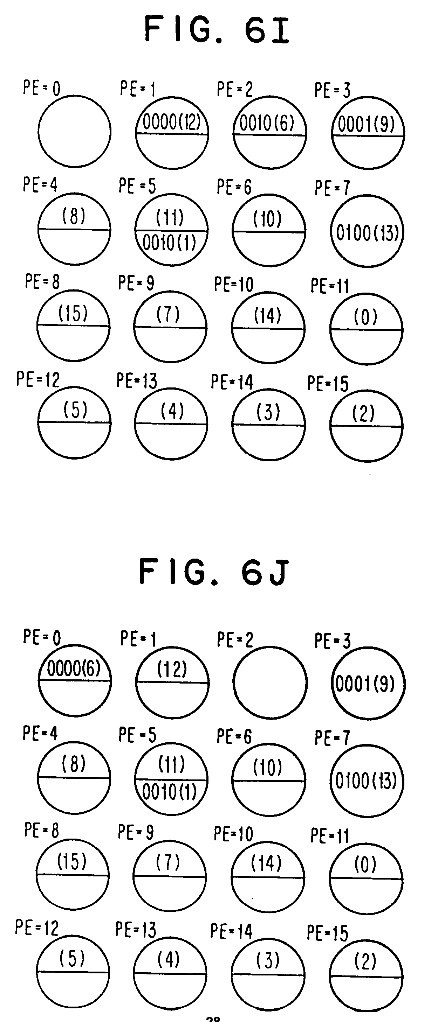

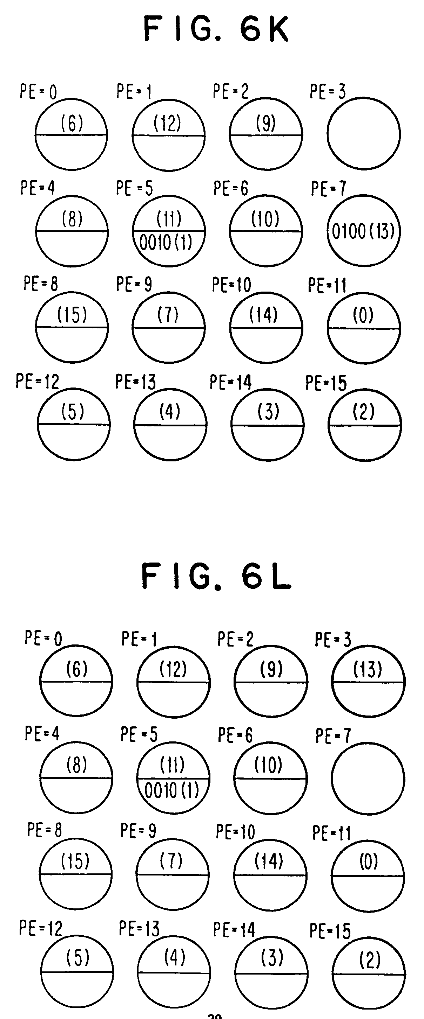

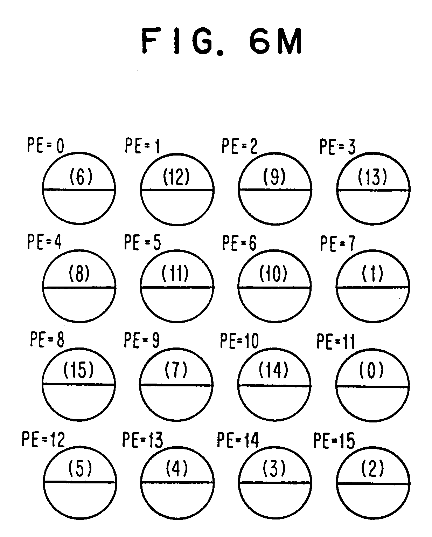

Figures 6A-6L illustrate the packet exchanges during each cycle using the buffer sensitive method.

Figure 6A illustrates the same initial packet assignment in each processing element as the first-available method. Figure 6B illustrates the packet locations after completion of a O-row exchange. The difference between the first-available method and the buffer sensitive method becomes apparent when, for example, it is observed that the packet from processing element 0 is not delivered to processing element 1 in the buffer sensitive method, while using the first-available method results in two packets being present in processing element 1. There are similar differences when comparing other processing elements in the mesh throughout the exchange procedure.

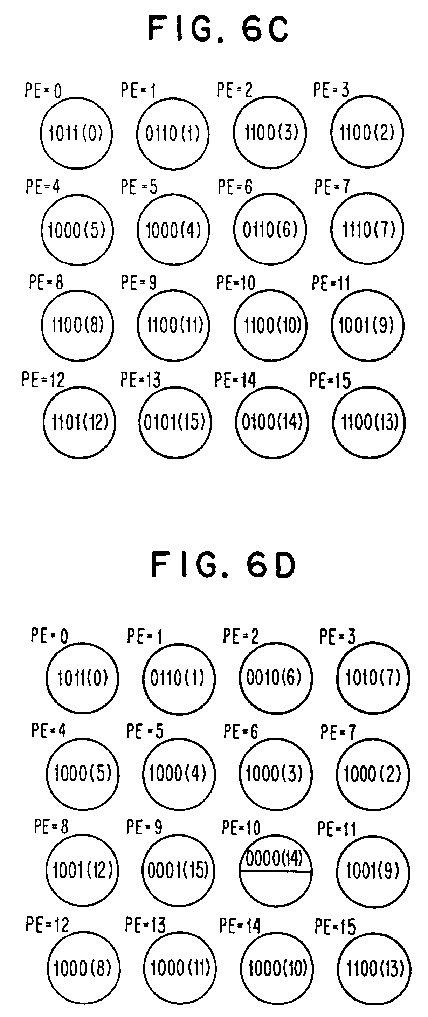

Figure 6C illustrates the packet locations after a 1-row exchange. Figure 6D illustrates the packet locations after a subsequent 0-column exchange. Figure 6E illustrates the packet locations after a 1-column exchange.

When a processing element contains a packet which has reached its final destination, it is as if a logic "1" is in all the address bits for purposes of transferring a packet. Similarly, empty processing elements are treated as if a logic "1" is in all the address bits for purposes of transferring a packet.

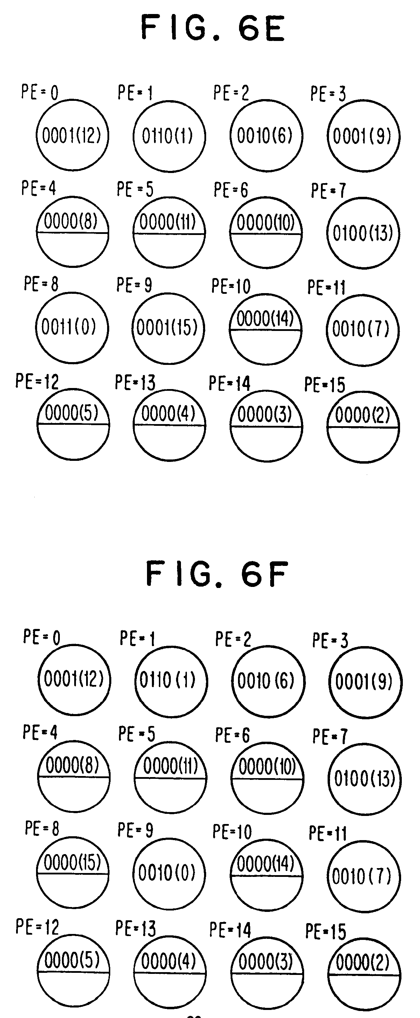

Figures 6F to 6H illustrate sequentially repeated O-row exchange, 1-row exchange, 0-column exchange of packets. Since a subsequent 1-column exchange results in no packet movement, Figure 6I illustrates the packet locations after a subsequent 0-row exchange. Figures 6J, 6K, 6L and 6M indicate packet locations after a sequence of a 1-row exchange, 0-row exchange, 0-column exchange and 1-row exchange after which all the packets are delivered at their respective final destinations in accordance with the arbitrary graph of Figure 1. The omitted exchanges result in no packet movement.

Force Exchange Method

A further alternative method is referred to as the force-exchange method. In the force-exchange method, unlike the buffer-sensitive method in which packets are exchanged only when both neighbors agree to the exchange, i.e. when both neighbors have a logic "1" in the i-th bit, an exchange will be forced if only one neighbor wants to forward the packet, i.e. only one neighbor has logic "1" in the i-th bit.

The force-exchange algorithm is shown in pseudocode as follows:

Phase 1.Preparing packet

For each link of the graph, represent the source node as

$(sr_k sr_{k-1}...sr_o, sc_k sc_{k-1}...sc_o)$

(sr for row of source node and sc for column of source node) and represent destination node as

$(dr_k dr_{k-1}...dr_o, dc_k dc_{k-1}...dc_o)$

Obtain packet as

$packet(i) = sr_i XOR dr_i$

$packet(i+k) = sc_i XOR dc_i$

Attached w-bit data as packet(2k+1) to packet(2k+w)

Phase 2.Exchanging packet

```
while (buffer___not___empty()) {
    for (i=0;i<k;i++){
        temp___packet = i-row___exchange ();
        if ((temp___packet(i) OR packet(i)) = 1) {
            packet = temp___packet;
            packet(i) = INV (packet(i));


        }


        else


        packet = old___packet;


    }
    for (j=k; j<2k;j++) {
        temp___packet = j-col___exchange ();
        if ((temp___packet(j) OR packet(j) = 1)) {
            packet = temp___packet;
            packet (j) = INV (packet(j));


        }


        else


        packet = old___packet;


    }
}
```

Similar to the buffer-sensitive method, the present method uses only one buffer location, temp__packet, for exchanging the packets thereby ensuring that there will be no saturation of buffer memory.

When only one neighbor is to exchange a packet, the force-exchange method forces the exchange to occur in order to facilitate the transfer for the one neighbor at the expense of the receiving neighbor. The receiving neighbor packet will be delivered to a processing element which is located further along in the mesh from its ultimate destination. The INV or inverse function reflects the described activity since inverting a logic "1" to a logic "0" indicates that the packet is closer to its ultimate destination, and conversely, inverting a logic "0" to a logic "1" indicates that the packet is further from its ultimate destination.

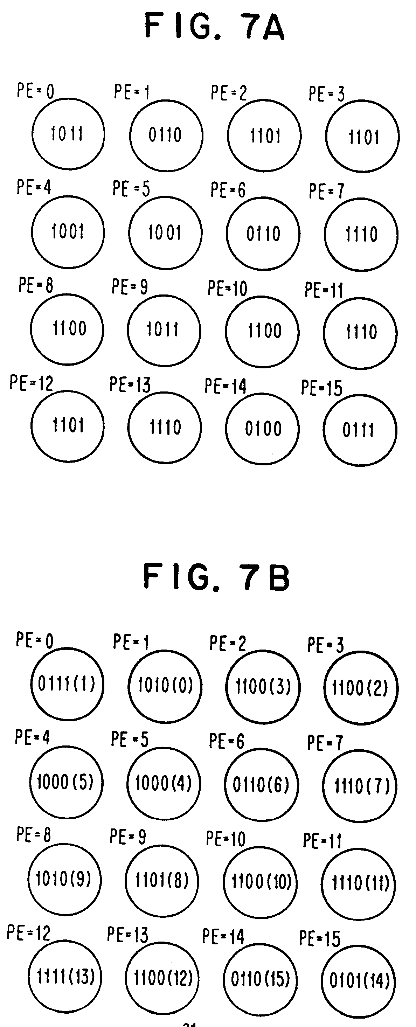

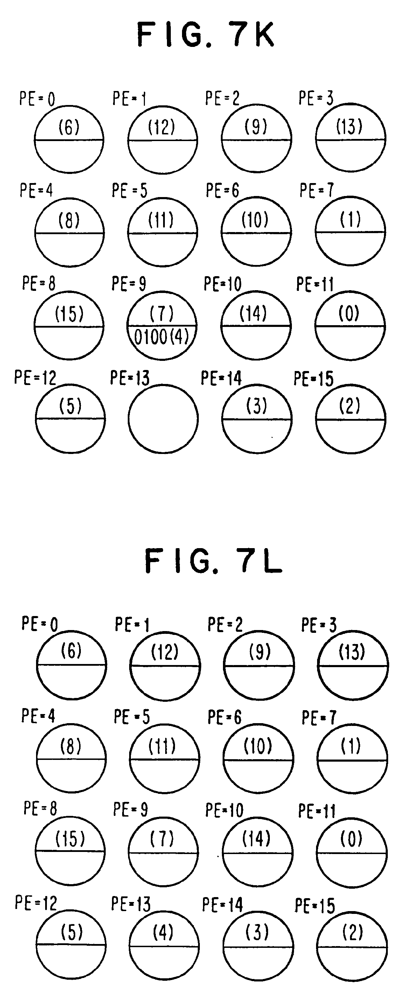

Figures 7A to 7L illustrate the packet exchange during each cycle when using the force-exchange method.

Figure 7A illustrates the initial packet assignments in each processing element 0 to 15, which is the same as in Figures 5a and 6a. Figure 7B illustrates the packet location after a O-row exchange. It should be noted, for example, that packet exchange between processing elements 0 and 1 using the force-exchange differs from both of the prior described methods. In the present method, processing element 0 and processing element 1 exchange packets by virtue of a logic "1" in the least significant bit in the packet in processing element 0. In the buffer-sensitive method, no exchange occurs because the least significant bit of the packet in processing element 1 contains a logic "0" and both neighbors do not agree to exchange. In the first available method the packet from processing element 0 is delivered to processing element 1, and the packet in processing element 1 remains in processing element 1. The packet exchange differs for other processing elements in the mesh throughout the exchange procedure.

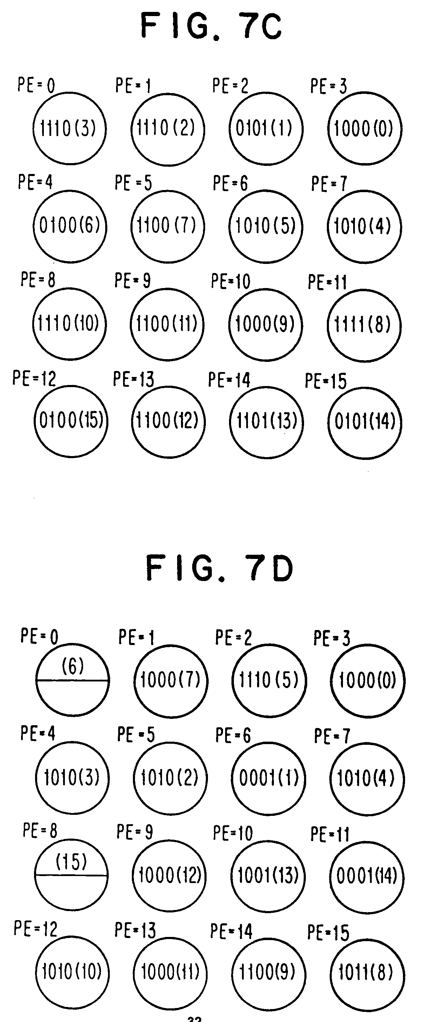

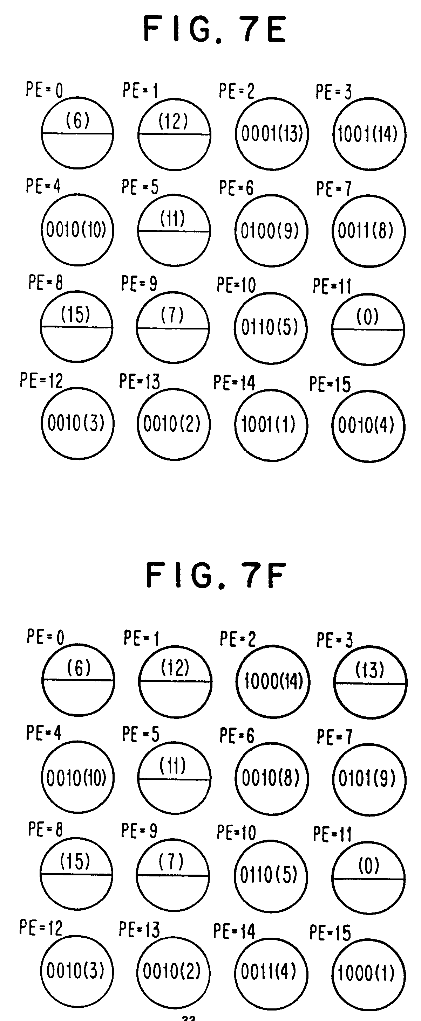

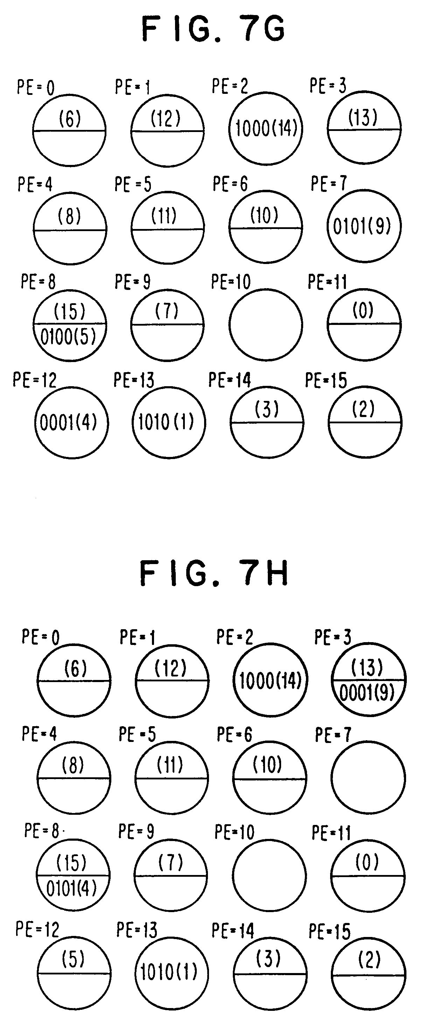

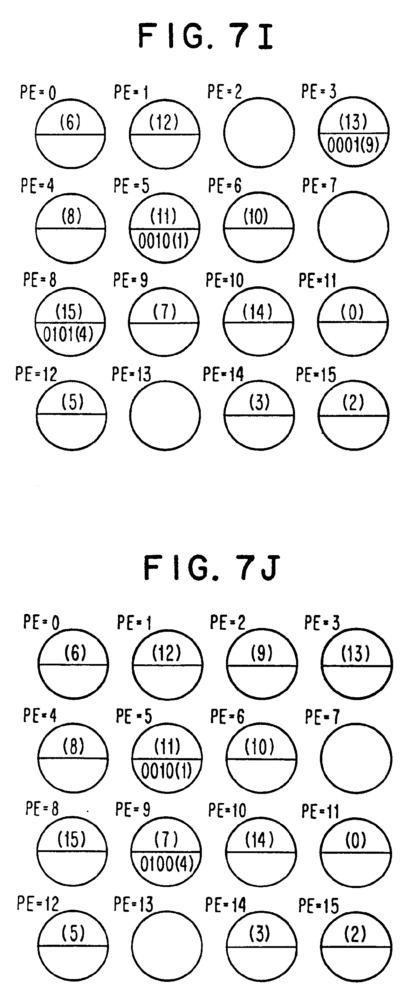

Figures 7C, 7D, 7E illustrate packet locations after undergoing a 1-row exchange, 0-column exchange and 1-column exchange in sequence. The sequential cycle of O-row exchange, 1-row exchange, 0-column exchange and 1-column exchange is repeated and the results of the packet movements are shown in Figures 7F, 7G, 7H, 7I respectively.

The sequence is repeated a third time and the results of the forced-exchange method are illustrated in Figures 7J, 7K, 7L where, after a third 0-column exchange, the packets have reached their respective final destinations in accordance with the arbitrary graph of Figure 1.

In view of the foregoing description of the invention, the improvement over the state-of-the-art will be apparent to those skilled in the art. The single instruction multiple address circuit in combination with a single instruction multiple datastream polymorphic mesh arrangement enables realization of an arbitrary-degree graph using an architecture having a coplanar low-degree interconnection graph. That is, any algorithm can be implemented by the polymorphic-mesh architecture with a coplanar interconnection network having a degree of four.

The invention has a significant benefit for packaging of a large-scale parallel processor. The polymorphic mesh interconnections among the processing elements is compatible with conventional two-dimensional electronic packaging technology such as VLSI chip and printed circuit boards. The direct mapping between the architecture graph and packaging technology leads to a very efficient utilization of both chip and printed circuit board area. Moreover, the physical interconnection is conventional, expanding in four directions, which results in short wiring distances between locally adjacent processing elements thereby providing increased speed. Since neighboring processing elements that are logically related to one another are physically in close proximity to each other, the communication among the processing elements is much faster than other higher-degree graphs, such as a n-cube. The increased speed is further enhanced by the denser packaging. In summary, more packets, measured in terms of quantity of bits per second, can be communicated than in heretofore known systems.

The system size is expandable by expansion in four directions by means of additional interconnections within the system, thus modular packaging is obtainable.

## Claims

1. A polymorphic-mesh array processing system in which a packet (25) of information containing address information (19, 21) and related data information (23) is transferred during an operating cycle from one individually addressable processing element (22 (i,j)) to another individually addressable processing element (22 (i ± 1, j ± 1)) comprising:

   a plurality of N individually addressable processing elements (22) configured in a single instruction multiple datastream mode where N is an integer greater than one;

   controller means (28) for providing a signal containing an instruction and an address for said processing elements during sequential operating cycles for transferring a respective packet (25) from a first one of said processing elements to a second one of said processing elements in response to said instruction and said address according to an arbitrary graph; and

single instruction multiple address (SIMA) means (30), including content addressable packet buffer memory (32) and connected to said controller means and to said processing elements, for causing during one of the sequential operating cycles said second processing element to access the respective packet in said buffer memory associated with said first processing element, in response to the address from said controller means, whereby the system transfers the respective packet from said first processing element to said second processing element to implement the arbitrary graph.

2. The array processing system as set forth in claim 1, wherein said single instruction multiple address means (30) causes during said one operating cycle the respective packet (25) to be transferred from said first processing element (22 (i,j)) to said second processing element (22 (i ± 1, j ± 1)) when a preselected bit of the respective packet is in a predetermined condition (e.g. binary 1).

3. The array processing system as set forth in claim 1 or 2, wherein said single instruction multiple address means (30) causes during said sequential operating cycles a concurrent transfer of a first respective packet (25) from one of said processing elements (22 (i,j)) to another of said processing elements (22 (i ± 1, j ± 1)) and of a second respective packet (25′) from said another processing element to said one processing element when a preselected bit of both said first and second respective packets are in a predetermined condition (e.g. binary 1).

4. The array processing system as set forth in claim 1 or 2, wherein said single instruction multiple address means (30) causes during said sequential operating cycles a concurrent transfer of a first respective packet (25) from one of said processing elements (20 (i,j)) to another of said processing elements (20 (i ± 1, j ± 1)) and of a second respective packet (25′) from said another processing element to said one processing element when a preselected bit of either said first respective packet or said second respective packet is in a predetermined condition (e.g. binary 1).

5. The array processing system as set forth in any one or more of the claims 1 - 4, wherein said single instruction multiple address means (30) receives the address (19, 21) from said controller means (28) and generates N output address signals for accessing by each processing element (22 (O.O-N-1, N-1)) of N packets located in respective buffer memory locations (O-F) of said content addressable packet buffer memory (32).

6. The array processing system as set forth in any one or more of the claims 1 - 5, wherein said single instruction multiple address means (30) generates an exist signal (from 48) to said first processing element (22 (i,j)) when a preselected bit of the respective packet (25) is in a predetermined condition (e.g. binary 1) and the respective packet is to be transferred from said first processing element.

7. A method for transferring information in a polymorphicmesh array processing system during an operating cycle from one of a plurality of N individually addressable processing elements (22 (i,j)), where N is an integer greater than one, to a neighboring one (22 (i ± 1, j ± 1)) of said processing elements comprising the steps of:

storing in a single instruction multiple address means (30) a respective packet (25) associated with each processing element (20 (O.O-N-1, N-1));

determining whether a predetermined bit of each stored packet associated with each processing element is at a preselected condition (e.g. binary 1); and

transferring the stored packet associated with one of said processing elements to a neighboring one of said processing elements when the predetermined bit of the stored packet associated with said one processing element is at the preselected condition according to a "first available method", which is used when the SIMA (30) can obtain the first packet (25) in the buffer memory (32) that has a logic 1 bit in the i-th position of the packet and where for a j-column exchange a second packet (j+k) is compared with a logic "1" so that the existence of a matching packet and its buffer address, if any, are provided, as a "force transfer method" is used when only one neighbor has a logic "1" in the i-th bit, or a "buffer sensitive method" will be forced when both neighbors agree to the packet exchange, i.e. when both neighbors have a logic "1" bit in the i-th bit.

8. The method as set forth in claim 7, wherein the transferring of the stored packet (25) associated with said one processing element (22 (i,j)) is prioritized when the predetermined bit is at the predetermined condition (1) in more than one stored packet.

9. An array processing system in which a packet (25) containing address information (19, 21) and related data information (23) is transferred during an operating cycle from one processing element (22 (i,j)) to another processing element (22 (i ± 1, j ± 1)) comprising:

an array (20) of individually addressable processing elements (22) configured in single instruction multiple datastream mode wherein certain ones of said processing elements are directly connected to each other; controller means (28) for providing during sequential operating cycles an instruction with an address signal; and

single instruction multiple address means (30), including a content addressable packet buffer memory (32) and connected to said controller means and to said processing elements, for comparing a condition of a preselected bit in a respective packet in said content addressable packet buffer memory associated with each processing element with a predetermined condition (e.g. binary 1) and for providing to each processing element a respective packet (25) in said content addressable packet buffer memory according to address information (19, 21) contained in the respective packet when the condition of the predetermined bit in the respective packet is the same as the predetermined condition such that the respective packet associated with one of said processing elements is transferred to another of said processing elements in response to said instruction with an address signal in accordance with an arbitrary graph.

10. The array processing system as set forth in claim 9, wherein said single instruction multiple address means (30) further includes a priority circuit (34) for prioritizing transferring of respective packets (25) when the condition of the preselected bit in more than one respective packet is the same as the predetermined condition (e.g. binary 1).

11. The array processing system as set forth in claim 10, wherein said single instruction multiple address means (30) generates an exist signal (from 48) to one of said processing elements (22) when the respective packet (25) associated with said one processing element is to be transferred from said one processing element.

12. The array processing system as set forth in claim 6, wherein exist signals from said single instruction multiple address means (30) are prioritized.

## Patentansprüche

1. Feldverarbeitungssystem für ein polymorphes Maschennetzwerk, in dem ein Paket (25) von Informationen, die Adreßinformationen (19, 21) und verknüpfte Dateninformationen (23) beinhalten, während eines Betriebszyklus von einem einzeln adressierbaren Verarbeitungselement (22 (i,j)) zu einem anderen einzeln adressierbaren Verarbeitungselement (22 (i ± 1, j ± 1)) übertragen wird, das folgendes umfaßt:

eine Vielzahl von N einzeln adressierbaren Verarbeitungselementen (22), die in einem Einzelinstruktion-Mehrfachdatenstrom-Modus konfiguriert sind, wobei N eine ganze Zahl größer eins ist; Steuermittel (28) für das Bereitstellen eines Signals, das eine Instruktion und eine Adresse für die Verarbeitungselemente während sequentieller Betriebszyklen enthält, um ein jeweiliges Paket (25) von einem ersten der Verarbeitungselemente zu einem zweiten der Verarbeitungselemente als Antwort auf die Instruktion und die Adresse gemäß einem willkürlichen Graph zu übertragen; und

Einzelinstruktion-Mehrfachadressen-Mittel (30) (SIMA), das einen inhaltsadressierbaren Paketpufferspeicher (32) umfaßt und mit dem Steuermittel und den Verarbeitungselementen verbunden ist, um während eines der sequentiellen Betriebszyklen das zweite Verarbeitungselement zu veranlassen, auf das jeweilige Paket in dem Pufferspeicher, das dem ersten Verarbeitungselement zugeordnet ist, als Antwort auf die Adresse von dem Steuermittel zuzugreifen, wodurch das System das jeweilige Paket von dem ersten Verarbeitungselement zu dem zweiten Verarbeitungselement überträgt, um den willkürlichen Graph zu implementieren.

2. Feldverarbeitungssystem wie in Anspruch 1 dargelegt, wobei das Einzelinstruktion-Mehrfachadressen-Mittel (30) während des einen Betriebszyklus das jeweilige Paket (25) veranlaßt, von dem ersten Verarbeitungselement (22 (i,j)) zu dem zweiten Verarbeitungselement (22 (i ± 1, j ± 1)) übertragen zu werden, wenn ein vorgewähltes Bit des jeweiligen Paketes in einem vorherbestimmten Zustand (z.B. binäre 1) ist.

3. Feldverarbeitungssystem wie in Anspruch 1 oder 2 dargelegt, wobei das Einzelinstruktion-Mehrfachadressen-Mittel (30) während der sequentiellen Betriebszyklen eine gleichzeitige Übertragung eines er-

EP 0 341 406 B1

sten jeweiligen Paketes (25) von einem der Verarbeitungselemente (22 (i,j)) zu einem anderen der Verarbeitungselemente (22 (i ± 1, j ± 1)) und eines zweiten jeweiligen Paketes (25′) von dem anderen Verarbeitungselement zu dem einen Verarbeitungselement veranlaßt, wenn ein vorgewähltes Bit sowohl des ersten als auch des zweiten jeweiligen Paketes in einem vorherbestimmten Zustand (z.B. binäre 1) sind.

4. Feldverarbeitungssystem wie in Anspruch 1 oder 2 dargelegt, wobei das Einzelinstruktion-Mehrfachadressen-Mittel (30) während der sequentiellen Betriebszyklen eine gleichzeitige Übertragung eines ersten jeweiligen Paketes (25) von einem der Verarbeitungselemente (20 (i,j)) zu einem anderen der Verarbeitungselemente (20 (i ± 1, j ± 1)) und eines zweiten jeweiligen Paketes (25′) von dem anderen Verarbeitungselement zu dem einen Verarbeitungselement veranlaßt, wenn ein vorgewähltes Bit entweder des ersten jeweiligen Paketes oder des zweiten jeweiligen Paketes in einem vorherbestimmten Zustand (z.B. binäre 1) sind.

5. Feldverarbeitungssystem wie in irgendeinem oder mehreren der Ansprüche 1 bis 4 dargelegt, wobei das Einzelinstruktion-Mehrfachadressen-Mittel (30) die Adresse (19, 21) von dem Steuermittel (28) empfängt und N Ausgabeadreßsignale erzeugt, um durch jedes Verarbeitungselement (22 (0.0-N-1, N-1)) auf N Pakete zuzugreifen, die in jeweiligen Pufferspeicherpositionen (O-F) des inhaltsadressierbaren Paketpufferspeichers (32) angeordnet sind.

6. Feldverarbeitungssystem wie in irgendeinem oder mehreren der Ansprüche 1 bis 5 dargelegt, wobei das Einzelinstruktion-Mehrfachadressen-Mittel (30) ein Exist-Signal (von 48) zu dem ersten Verarbeitungselement (22 (i,j)) erzeugt, wenn ein vorgewähltes Bit des jeweiligen Paketes (25) in einem vorherbestimmten Zustand (z.B. binäre 1) ist und das jeweilige Paket von dem ersten Verarbeitungselement zu übertragen ist.

7. Verfahren zur Übertragung von Informationen in einem Feldverarbeitungssystem für ein polymorphes Maschennetzwerk während eines Betriebszyklus von einem aus einer Vielzahl N einzeln adressierbarer Verarbeitungselemente (22 (i,j)), wobei N eine ganze Zahl größer eins ist, zu einem benachbarten (22 (i ± 1, j ± 1)) der Verarbeitungselemente, das die folgenden Schritte umfaßt:
Speichern eines jeweiligen Paketes (25), das mit jedem Verarbeitungselement (20 (0.0-N-1, N-1)) verbunden ist, in einem Einzelinstruktion-Mehrfachadressen-Mittel (30);
Bestimmen, ob ein vorherbestimmtes Bit jedes gespeicherten Paketes, das jedem Verarbeitungselement zugeordnet ist, in einem vorgewählten Zustand (z.B. binäre 1) ist; und
Übertragen des gespeicherten Paketes, das einem der Verarbeitungselemente zugeordnet ist, an eines der benachbarten Verarbeitungselemente, wenn das vorherbestimmte Bit des gespeicherten Paketes, das dem einen Verarbeitungselement zugeordnet ist, in dem vorgewählten Zustand gemäß einem "ersten verfügbaren Verfahren" ist, das verwendet wird, wenn das SIMA (30) das erste Paket (25) in dem Pufferspeicher (32) erhalten kann, der an der i-ten Position des Paketes ein logisches Bit 1 hat, und wo für einen j-Spalten-Austausch ein zweites Paket (j+k) mit einer logischen "1" verglichen wird, so daß für die Existenz eines entsprechenden Paketes und seiner Pufferadresse, falls vorhanden, gesorgt wird, indem ein "erzwungenes Übertragungsverfahren" verwendet wird, wenn nur ein Nachbar in dem i-ten Bit eine logische "1" hat, oder ein "puffersensitives Verfahren" erzwungen wird, wenn beide Nachbarn dem Paketaustausch zustimmen, d.h. wenn beide Nachbarn in dem i-ten Bit eine logische "1" haben.

8. Verfahren wie in Anspruch 7 dargelegt, wobei der Übertragung des gespeicherten Paketes (25), das dem einen Verarbeitungselement (22 (i,j)) zugeordnet ist, Priorität zugewiesen wird, wenn das vorherbestimmte Bit in mehr als einem gespeicherten Paket in dem vorherbestimmten Zustand (1) ist.

9. Feldverarbeitungssystem, in dem ein Paket (25), das Adreßinformationen (19, 21) und verknüpfte Dateninformationen (23) enthält, während eines Betriebszyklus von einem Verarbeitungselement (22 (i,j)) zu einem anderen Verarbeitungselement (22 (i ± 1, j ± 1)) übertragen wird, das folgendes umfaßt:
ein Feld (20) von einzeln adressierbaren Verarbeitungselementen (22), konfiguriert im Einzelinstruktion-Mehrfachdatenstrom-Modus, wobei bestimmte der Verarbeitungselemente direkt miteinander verbunden sind;
Steuereinheitenmittel (28) zur Bereitstellung einer Instruktion mit einem Adreßsignal während sequentieller Betriebszyklen; und
Einzelinstruktion-Mehrfachadressen-Mittel (30), die einen inhaltsadressierbaren Paketpufferspeichers (32) umfassen und mit dem Steuereinheitenmittel und den Verarbeitungselementen verbunden sind, um einen Zustand eines vorgewählten Bits in einem jeweiligen Paket in dem inhaltsadressierbaren Paketpufferspeicher, das jedem Verarbeitungselement zugeordnet ist, mit einem vorherbestimmten Zustand (z.B. binäre 1) zu vergleichen und um jedem Verarbeitungselement ein jeweiliges Paket (25) in dem inhaltsadressierbaren Paketpufferspeicher gemäß den Adreßinformationen (19, 21) bereitzustellen, die in dem jeweiligen Paket enthalten sind, wenn der Zustand des vorherbestimmten Bits in dem jeweiligen Paket derselbe wie der vorherbestimmte Zustand ist, so daß das jeweilige Paket, das einem der Verarbeitungselemente zugeordnet ist, zu einem anderen der Verarbeitungselemente als Antwort auf die Instruktion mit einem Adreßsignal gemäß einem willkürlichen Graph übertragen wird.

10. Feldverarbeitungssystem wie in Anspruch 9 dargelegt, wobei das Einzelinstruktion-Mehrfachadressen-Mittel (30) weiterhin einen Prioritätsschaltkreis (34) enthält, um der Übertragung jeweiliger Pakete (25) Priorität zuzuweisen, wenn der Zustand des vorgewählten Bits in mehr als einem jeweiligen Paket derselbe wie die vorherbestimmte Zustand ist (z.B. binäre 1).

11. Feldverarbeitungssystem wie in Anspruch 10 dargelegt, wobei das Einzelinstruktion-Mehrfachadressen-Mittel (30) ein Exist-Signal (von 48) zu einem der Verarbeitungselemente (22) erzeugt, wenn das jeweilige Paket (25), das dem einen Verarbeitungselement zugeordnet ist, von dem einen Verarbeitungselement zu übertragen ist.

12. Feldverarbeitungssystem wie in Anspruch 6 dargelegt, wobei Exist-Signalen von dem Einzelinstruktion-Mehrfachadressen-Mittel (30) Priorität zugewiesen wird.


**Revendications**

1. Un système de traitement à réseau maillé polymorphe dans lequel un paquet (25) d'informations contenant des informations d'adresse (19, 21) et des informations de données associées (23), est transféré pendant un cycle d'exploitation, d'un élément de traitement individuellement adressable (22 (i,j)) à un autre élément de traitement individuellement adressable (22 (i ± 1, j ± 1)) comprenant:
   - une pluralité de N éléments de traitement individuellement adressables (22) configurés en un mode à flots de données multiples à instruction unique où N est un entier supérieur à 1;
   - des moyens de commande (28) pour délivrer un signal contenant une instruction et une adresse pour lesdits éléments de traitement pendant des cycles d'exploitation séquentiels afin de transférer un paquet respectif (25) d'un premier desdits éléments de traitement à un second desdits éléments de traitement en réponse à ladite instruction et à ladite adresse selon un graphe arbitraire; et
   - des moyens à adresses multiples à instruction unique (SIMA) (30) comprenant la mémoire intermédiaire de paquets adressable par son contenu (32) et connectés auxdits moyens de commande et auxdits éléments de traitement afin de provoquer, pendant l'un des cycles d'exploitation séquentiels, l'accès par ledit second élément de traitement, du paquet respectif dans ladite mémoire intermédiaire associée audit premier élément de traitement, en réponse à l'adresse issue desdits moyens de commande, ce qui fait que le système transfère le paquet respectif dudit premier élément de traitement audit second élément de traitement afin de mettre en oeuvre le graphe arbitraire.

2. Le système de traitement à réseau selon la revendication 1 dans lequel lesdits moyens à adresses multiples à instruction unique (30) provoquent, pendant ledit premier cycle d'exploitation, le transfert du paquet respectif (25) dudit premier élément de traitement (22 (i,j)) audit second élément de traitement (22 (i ± 1, j ± 1)) lorsqu'un bit présélectionné du paquet respectif est dans une condition prédéterminée (par exemple, un "1" binaire).

3. Le système de traitement à réseau selon la revendication 1 ou 2, dans lequel lesdits moyens à adresses multiples à instruction unique (30) provoquent, pendant lesdits cycles d'exploitation séquentiels, un transfert concurrent d'un premier paquet respectif (25) de l'un desdits éléments de traitement (22 (i,j)) à un autre desdits éléments de traitement (22 (i ± 1, j ± 1)) et d'un second paquet respectif (25') dudit autre élément de traitement audit premier élément de traitement lorsqu'un bit présélectionné desdits premier et second paquets respectifs, est dans une condition prédéterminée (par exemple, un "1" binaire).

4. Le système de traitement à réseau selon la revendication 1 ou 2, dans lequel lesdits moyens à adresses multiples à instruction unique (30) provoquent, pendant lesdits cycles d'exploitation séquentiels, un transfert concurrent d'un premier paquet respectif (25) de l'un desdits éléments de traitement (20 (i,j)) à un autre desdits éléments de traitement (20 (i ± 1, j ± 1)) et d'un second paquet respectif (25') dudit autre élément de traitement audit premier élément de traitement, lorsqu'un bit présélectionné soit dudit premier paquet respectif, soit dudit second paquet respectif, est dans une condition prédéterminée (par exemple un "1" binaire).

5. Le système de traitement à réseau selon l'une quelconque ou plus des revendications 1 - 4, dans lequel lesdits moyens à adresses multiples à instruction unique (30) reçoivent l'adresse (19, 21) desdits moyens de commande (28) et génèrent N signaux d'adresse de sortie pour l'accès par chaque élément de traitement (22 (0.0-N-1, N-1)), de N paquets situés dans des emplacements respectifs de memoire intermédiaire (O-F) de ladite mémoire intermédiaire de paquets adressable par son contenu (32).

6. Le système de traitement à réseau selon l'une quelconque ou plus des revendications 1 - 5 dans lequel lesdits moyens à adresses multiples à instruction unique (30) génèrent un signal d'existence (depuis 48) audit premier élément de traitement (22 (i,j)) lorsqu'un bit présélectionné du paquet respectif (25) est dans une condition prédéterminée (par exemple un "1" binaire) et que le paquet respectif est à transférer depuis ledit premier élément de traitement.

7. Une méthode pour transférer des informations dans un système de traitement à réseau maillé polymorphe pendant un cycle d'exploitation, de l'un d'une pluralité de N éléments de traitement individuellement adressables (22 (i,j)), où N est un entier supérieur à un, à un élément voisin (22 (i ± 1, j ± 1)) desdits éléments de traitement comprenant les étapes suivantes:
   - l'emmagasinage dans un moyen à adresses multiples à instruction unique (30) d'un paquet respectif (25) associé à chaque élément de traitement (20 (0.0-N-1, N-1));
   - déterminer si un bit prédéterminé de chaque paquet emmagasiné associé à chaque élément de traitement, est dans une condition présélectionnée (par exemple un "1" binaire); et
   - le transfert du paquet emmagasiné associé à l'un desdits éléments de traitement, à un élément voisin desdits éléments de traitement lorsque le bit prédéterminé du paquet emmagasiné associé audit premier élément de traitement, est dans la condition présélectionnée selon une "première méthode disponible" qui est utilisée lorsque les moyens SIMA (30) peuvent obtenir le premier paquet (25) en la mémoire intermédiaire (32) qui a un bit au "1" logique dans la ième position du paquet et où, pour un échange de j colonnes, un second paquet (j+k) est comparé à un "1" logique de façon que l'existence d'un paquet correspondant et de son adresse de mémoire intermédiaire, s'il y a lieu, soient indiquées, puisqu'une "méthode de transfert forcé" n'est utilisée que lorsqu'un seul voisin présente un "1" logique dans le ième bit, ou une "méthode répondant à la mémoire intermédiaire" sera forcée lorsque les deux voisins seront en accord pour l'échange du paquet, c'est à dire lorsque les deux voisins présenteront un "1" logique dans le ième bit.

8. La méthode selon la revendication 7 dans laquelle le transfert du paquet emmagasiné (25) associé audit premier élément de traitement (22 (i,j)) est prioritaire lorsque le bit prédéterminé est dans la condition prédéterminée (1) dans plus d'un paquet.

9. Un système de traitement de réseau dans lequel un paquet (25) contenant des informations d'adresse (19, 21) et des informations de données associées (23), est transféré pendant un cycle d'exploitation d'un élément de traitement (22 (i,j)) à un autre élément de traitement (22 (i ± 1, j ± 1)), comprenant:
   - un réseau (20) d'éléments de traitement individuellement adressables (22) configurés en mode à flots de données multiples à instruction unique, dans lequel certains desdits éléments de traitement sont directement connectés les uns aux autres;
   - des moyens de commande (28) pour délivrer, pendant des cycles d'exploitation séquentiels, une instruction avec un signal d'adresse; et
   - des moyens à adresses multiples à instruction unique (30) comprenant une mémoire intermédiaire de paquets adressable par son contenu (32) et connectée auxdits moyens de commande et auxdits éléments de traitement, pour comparer la condition d'un bit présélectionné dans un paquet respectif de ladite mémoire intermédiaire de paquets adressable par son contenu associée à chaque élément de traitement, à une condition prédéterminée (par exemple un "1" binaire) et pour délivrer à chaque élément de traitement, un paquet respectif (25) dans ladite mémoire intermédiaire de paquets adressable par son contenu selon l'information d'adresse (19, 21) contenue dans le paquet respectif lorsque la condition du bit prédéterminé dans le paquet respectif est la même que la condition prédéterminée de façon que le paquet respectif associé à l'un desdits éléments de traitement soit transféré à un autre desdits éléments de traitement en réponse à ladite instruction avec un signal d'adresse en accord avec un graphe arbitraire.

10. Le système de traitement à réseau selon la revendication 9 dans lequel ledit moyen à adresses multiples à instruction unique (30) comprend en outre un circuit de priorité (34) pour donner la priorité au transfert de paquets respectifs (25) lorsque la condition du bit présélectionné dans plus d'un paquet respectif est la même que la condition prédéterminée (par exemple un "1" binaire).

11. Le système de traitement à réseau selon la revendication 10, dans lequel ledit moyen à adresses multiples à instruction unique (30) génère un signal d'existence (depuis 48) à l'un desdits éléments de traitement (22) lorsque le paquet respectif (25) associé audit premier élément de traitement doit être transféré depuis ledit premier élément de traitement.

12. Le système de traitement à réseau selon la revendication 6, dans lequel des signaux d'existence issus dudit moyen à adresses multiples à instruction unique (30) sont prioritaires.

EP 0 341 406 B1

# FIG. 1

# FIG. 3

17

# F I G. 2

INSTRUCTION

CONTROLLER 28

20

(0,0) (0,1)    22

(1,0)  W  N  E
          S

(N-1,N-1)

ADDRESS

EXTERNAL MEMORY(0,0)

EXTERNAL MEMORY(i,j)    24

PACKET BUFFER    26

EXTERNAL MEMORY(N-1,N-1)

# FIG. 4

DATA TO/FROM PE 22 IN ARRAY 20 — 42

**CONTENT-ADDRESSABLE MEMORY** — 32

30

MODE CONTROL 40

BUFFER (0)   BUFFER (1) — — — BUFFER (F)

| BIT(0) | BIT(0) | | BIT(0) |
| BIT(1) | BIT(1) | | BIT(1) |
| BIT(K) | BIT(K) | | BIT(K) |

VBL(0)   VBL(1) — — — VBL(F)

44

50 — 2:1

EXIST FLAG — 48

PRIORITY CIRCUIT — 34

REGISTER — 36

ADDRESS MIXING CIRCUIT — 46

38

ADDRESS FROM CONTROLLER

EP 0 341 406 B1

# FIG. 5A

| | | | |
|---|---|---|---|
| PE=0 1011 | PE=1 0110 | PE=2 1101 | PE=3 1101 |
| PE=4 1001 | PE=5 1001 | PE=6 0110 | PE=7 1110 |
| PE=8 1100 | PE=9 1011 | PE=10 1100 | PE=11 1110 |
| PE=12 1101 | PE=13 1110 | PE=14 0100 | PE=15 0111 |

# FIG. 5B

| | | | |
|---|---|---|---|
| PE=0 | PE=1 0110(1) 1010(0) | PE=2 1100(3) | PE=3 1100(2) |
| PE=4 1000(5) | PE=5 1000(4) | PE=6 0110(6) | PE=7 1110(7) |
| PE=8 1100(8) 1010(9) | PE=9 | PE=10 1100(10) | PE=11 1110(11) |
| PE=12 | PE=13 1110(13) 1100(12) | PE=14 0100(14) 0110(15) | PE=15 |

20

# F I G. 5C

PE=0

PE=1
1010(0)

PE=2
1100(3)

PE=3
1100(2)
0100(1)

PE=4
1000(5)
0100(6)

PE=5
1000(4)
1100(7)

PE=6

PE=7

PE=8
1100(8)

PE=9
1100(11)

PE=10
1100(10)
1000(9)

PE=11

PE=12
0100(15)

PE=13
1100(12)

PE=14
0100(14)

PE=15
1100(13)

# F I G. 5D

PE=0
0000(6)

PE=1
1010(0)
1000(7)

PE=2

PE=3
0100(1)

PE=4
1000(5)

PE=5
1000(4)

PE=6
1000(3)

PE=7
1000(2)

PE=8
0000(15)

PE=9
1000(12)

PE=10
0000(14)
1000(9)

PE=11
1000(13)

PE=12
1000(8)

PE=13
1000(11)

PE=14
1000(10)

PE=15

# FIG. 5E

| | | | |
|---|---|---|---|
| PE=0 | PE=1 | PE=2 | PE=3 |
| 0000(6) | 0000(12) / 1000(7) | 0000(9) | 0000(13) / 0100(1) |
| PE=4 | PE=5 | PE=6 | PE=7 |
| 0000(8) | 0000(11) | 0000(10) | |
| PE=8 | PE=9 | PE=10 | PE=11 |
| 0000(15) | 0010(0) | 0000(14) | |
| PE=12 | PE=13 | PE=14 | PE=15 |
| 0000(5) | 0000(4) | 0000(3) | 0000(2) |

# FIG. 5F

| | | | |
|---|---|---|---|
| PE=0 | PE=1 | PE=2 | PE=3 |
| 0000(6) | 0000(12) / 1000(7) | 0000(9) | 0000(13) / 0100(1) |
| PE=4 | PE=5 | PE=6 | PE=7 |
| 0000(8) | 0000(11) | 0000(10) | |
| PE=8 | PE=9 | PE=10 | PE=11 |
| 0000(15) | | 0000(14) | 0000(0) |
| PE=12 | PE=13 | PE=14 | PE=15 |
| 0000(5) | 0000(4) | 0000(3) | 0000(2) |

# FIG. 5G

PE = 0 (6)
PE = 1 (12) 1000(7)
PE = 2 (9)
PE = 3 (13)

PE = 4 (8)
PE = 5 (11)
PE = 6 (10)
PE = 7 0000(1)

PE = 8 (15)
PE = 9
PE = 10 (14)
PE = 11 0000(0)

PE = 12 (5)
PE = 13 (4)
PE = 14 (3)
PE = 15 (2)

# FIG. 5H

PE = 0 (6)
PE = 1 (12)
PE = 2 (9)
PE = 3 (13)

PE = 4 (8)
PE = 5 (11)
PE = 6 (10)
PE = 7 (1)

PE = 8 (15)
PE = 9 (7)
PE = 10 (14)
PE = 11 (0)

PE = 12 (5)
PE = 13 (4)
PE = 14 (3)
PE = 15 (2)

# F I G. 6A

PE = 0 (1011)
PE = 1 (0110)
PE = 2 (1101)
PE = 3 (1101)

PE = 4 (1001)
PE = 5 (1001)
PE = 6 (0110)
PE = 7 (1110)

PE = 8 (1100)
PE = 9 (1011)
PE = 10 (1100)
PE = 11 (1110)

PE = 12 (1101)
PE = 13 (1110)
PE = 14 (0100)
PE = 15 (0111)

# F I G. 6B

PE = 0 (1011(0))
PE = 1 (0110(1))
PE = 2 (1100(3))
PE = 3 (1100(2))

PE = 4 (1000(5))
PE = 5 (1000(4))
PE = 6 (0110(6))
PE = 7 (1110(7))

PE = 8 (1100(8))
PE = 9 (1011(9))
PE = 10 (1100(10))
PE = 11 (1110(11))

PE = 12 (1101(12))
PE = 13 (1110(13))
PE = 14 (0100(14))
PE = 15 (0111(15))

24

# FIG. 6C

PE=0    PE=1    PE=2    PE=3

1011(0)  0110(1)  1100(3)  1100(2)

PE=4    PE=5    PE=6    PE=7

1000(5)  1000(4)  0110(6)  1110(7)

PE=8    PE=9    PE=10    PE=11

1100(8)  1100(11)  1100(10)  1001(9)

PE=12    PE=13    PE=14    PE=15

1101(12)  0101(15)  0100(14)  1100(13)

# FIG. 6D

PE=0    PE=1    PE=2    PE=3

1011(0)  0110(1)  0010(6)  1010(7)

PE=4    PE=5    PE=6    PE=7

1000(5)  1000(4)  1000(3)  1000(2)

PE=8    PE=9    PE=10    PE=11

1001(12)  0001(15)  0000(14)  1001(9)

PE=12    PE=13    PE=14    PE=15

1000(8)  1000(11)  1000(10)  1100(13)

# FIG. 6E

PE = 0
0001(12)

PE = 1
0110(1)

PE = 2
0010(6)

PE = 3
0001(9)

PE = 4
0000(8)

PE = 5
0000(11)

PE = 6
0000(10)

PE = 7
0100(13)

PE = 8
0011(0)

PE = 9
0001(15)

PE = 10
0000(14)

PE = 11
0010(7)

PE = 12
0000(5)

PE = 13
0000(4)

PE = 14
0000(3)

PE = 15
0000(2)

# FIG. 6F

PE = 0
0001(12)

PE = 1
0110 (1)

PE = 2
0010 (6)

PE = 3
0001(9)

PE = 4
0000(8)

PE = 5
0000(11)

PE = 6
0000(10)

PE = 7
0100(13)

PE = 8
0000(15)

PE = 9
0010(0)

PE = 10
0000(14)

PE = 11
0010 (7)

PE = 12
0000(5)

PE = 13
0000(4)

PE = 14
0000(3)

PE = 15
0000(2)

# FIG. 6G

# FIG. 6H

# FIG. 6I

# FIG. 6J

# FIG. 6K

PE = 0 (6)
PE = 1 (12)
PE = 2 (9)
PE = 3

PE = 4 (8)
PE = 5 (11) 0010 (1)
PE = 6 (10)
PE = 7 0100 (13)

PE = 8 (15)
PE = 9 (7)
PE = 10 (14)
PE = 11 (0)

PE = 12 (5)
PE = 13 (4)
PE = 14 (3)
PE = 15 (2)

# FIG. 6L

PE = 0 (6)
PE = 1 (12)
PE = 2 (9)
PE = 3 (13)

PE = 4 (8)
PE = 5 (11) 0010 (1)
PE = 6 (10)
PE = 7

PE = 8 (15)
PE = 9 (7)
PE = 10 (14)
PE = 11 (0)

PE = 12 (5)
PE = 13 (4)
PE = 14 (3)
PE = 15 (2)

# FIG. 6M

EP 0 341 406 B1

# F I G. 7A

PE = 0 — 1011
PE = 1 — 0110
PE = 2 — 1101
PE = 3 — 1101

PE = 4 — 1001
PE = 5 — 1001
PE = 6 — 0110
PE = 7 — 1110

PE = 8 — 1100
PE = 9 — 1011
PE = 10 — 1100
PE = 11 — 1110

PE = 12 — 1101
PE = 13 — 1110
PE = 14 — 0100
PE = 15 — 0111

# F I G. 7B

PE = 0 — 0111(1)
PE = 1 — 1010(0)
PE = 2 — 1100(3)
PE = 3 — 1100(2)

PE = 4 — 1000(5)
PE = 5 — 1000(4)
PE = 6 — 0110(6)
PE = 7 — 1110(7)

PE = 8 — 1010(9)
PE = 9 — 1101(8)
PE = 10 — 1100(10)
PE = 11 — 1110(11)

PE = 12 — 1111(13)
PE = 13 — 1100(12)
PE = 14 — 0110(15)
PE = 15 — 0101(14)

31

# FIG. 7C

PE = 0
1110 (3)

PE = 1
1110 (2)

PE = 2
0101 (1)

PE = 3
1000 (0)

PE = 4
0100 (6)

PE = 5
1100 (7)

PE = 6
1010 (5)

PE = 7
1010 (4)

PE = 8
1110 (10)

PE = 9
1100 (11)

PE = 10
1000 (9)

PE = 11
1111 (8)

PE = 12
0100 (15)

PE = 13
1100 (12)

PE = 14
1101 (13)

PE = 15
0101 (14)

# FIG. 7D

PE = 0
(6)

PE = 1
1000 (7)

PE = 2
1110 (5)

PE = 3
1000 (0)

PE = 4
1010 (3)

PE = 5
1010 (2)

PE = 6
0001 (1)

PE = 7
1010 (4)

PE = 8
(15)

PE = 9
1000 (12)

PE = 10
1001 (13)

PE = 11
0001 (14)

PE = 12
1010 (10)

PE = 13
1000 (11)

PE = 14
1100 (9)

PE = 15
1011 (8)

# FIG. 7E

| | | | |
|---|---|---|---|
| PE=0 (6) | PE=1 (12) | PE=2 0001(13) | PE=3 1001(14) |
| PE=4 0010(10) | PE=5 (11) | PE=6 0100(9) | PE=7 0011(8) |
| PE=8 (15) | PE=9 (7) | PE=10 0110(5) | PE=11 (0) |
| PE=12 0010(3) | PE=13 0010(2) | PE=14 1001(1) | PE=15 0010(4) |

# FIG. 7F

| | | | |
|---|---|---|---|
| PE=0 (6) | PE=1 (12) | PE=2 1000(14) | PE=3 (13) |
| PE=4 0010(10) | PE=5 (11) | PE=6 0010(8) | PE=7 0101(9) |
| PE=8 (15) | PE=9 (7) | PE=10 0110(5) | PE=11 (0) |
| PE=12 0010(3) | PE=13 0010(2) | PE=14 0011(4) | PE=15 1000(1) |

33

# FIG. 7G

PE = 0 (6)
PE = 1 (12)
PE = 2 1000(14)
PE = 3 (13)

PE = 4 (8)
PE = 5 (11)
PE = 6 (10)
PE = 7 0101(9)

PE = 8 (15) 0100(5)
PE = 9 (7)
PE = 10
PE = 11 (0)

PE = 12 0001(4)
PE = 13 1010(1)
PE = 14 (3)
PE = 15 (2)

# FIG. 7H

PE = 0 (6)
PE = 1 (12)
PE = 2 1000(14)
PE = 3 (13) 0001(9)

PE = 4 (8)
PE = 5 (11)
PE = 6 (10)
PE = 7

PE = 8 (15) 0101(4)
PE = 9 (7)
PE = 10
PE = 11 (0)

PE = 12 (5)
PE = 13 1010(1)
PE = 14 (3)
PE = 15 (2)

# FIG. 7I

PE=0 (6)
PE=1 (12)
PE=2
PE=3 (13) / 0001(9)

PE=4 (8)
PE=5 (11) / 0010(1)
PE=6 (10)
PE=7

PE=8 (15) / 0101(4)
PE=9 (7)
PE=10 (14)
PE=11 (0)

PE=12 (5)
PE=13
PE=14 (3)
PE=15 (2)

# FIG. 7J

PE=0 (6)
PE=1 (12)
PE=2 (9)
PE=3 (13)

PE=4 (8)
PE=5 (11) / 0010(1)
PE=6 (10)
PE=7

PE=8 (15)
PE=9 (7) / 0100(4)
PE=10 (14)
PE=11 (0)

PE=12 (5)
PE=13
PE=14 (3)
PE=15 (2)

# FIG. 7K

PE=0 (6) | PE=1 (12) | PE=2 (9) | PE=3 (13)

PE=4 (8) | PE=5 (11) | PE=6 (10) | PE=7 (1)

PE=8 (15) | PE=9 (7) 0100(4) | PE=10 (14) | PE=11 (0)

PE=12 (5) | PE=13 | PE=14 (3) | PE=15 (2)

# FIG. 7L

PE=0 (6) | PE=1 (12) | PE=2 (9) | PE=3 (13)

PE=4 (8) | PE=5 (11) | PE=6 (10) | PE=7 (1)

PE=8 (15) | PE=9 (7) | PE=10 (14) | PE=11 (0)

PE=12 (5) | PE=13 (4) | PE=14 (3) | PE=15 (2)